# EUROPEAN PATENT APPLICATION

(11) **EP 4 167 168 A1**
(43) Date of publication of application: **19.04.2023**
(21) Application number: 21820967.4
(22) Date of filing: 23.05.2021
(51) Int. Cl.: G06Q 30/02

(54) **INFORMATION PROVISION SERVICE SYSTEM CAPABLE OF SECURING CONTENT**

(30) Priority: 11.06.2020 KR 20200071195
(71) Applicant: Altsoft. Inc., Seoul 06097 (KR)
(72) Inventor: KIM, Chan Hong, Seoul 06097 (KR)
(74) Representative: M. Zardi & Co S.A.
(86) International application number: PCT/KR2021/006389
(87) International publication number: WO 2021/251648

(57) **Abstract**

According to the information provision service system capable of securing content proposed in the present disclosure, the informational content and the advertisement are provided to the digital device, and furthermore, the advertising cost benefit is provided to the advertiser supplying the informational content, so that advertisers are inspired to produce and supply high-quality informational content, thereby solving the problem of lack of content and reducing the advertisers' burden of advertising costs through the advertising cost benefit. In addition, according to the information provision service system capable of securing content proposed in the present disclosure, the content received from the advertiser are separated into the informational content and the advertising content and the penalty is given to the advertiser that has provided the advertising content, so that the advertising content produced for advertising is excluded and high quality of content is maintained, thereby increasing customer satisfaction with the content.

## Description

### Technical Field

The present disclosure relates to an information provision service system and, more particularly, to an information provision service system capable of securing content.

### Background Art

Conventional advertisements have been provided through mass media such as newspapers, magazines, radio, and broadcasting. However, with the development of a mobile communication technology, the number of users accessing media through mobile devices has increased exponentially, and attempts for advertisements provided through the mobile devices have begun. Regarding conventional advertising through mass media, advertisements are unilaterally provided to many random people, so there is a limitation in that personalized advertisements cannot be provided to users. Conversely, advertising through mobile devices has an advantage in that various types of information of users collected from the mobile devices are used to provide the users with personalized advertisements. Accordingly, it is possible to more effectively provide the users with customized advertisements, so advertising through mobile devices is one of very important advertising means.

In the meantime, rather than provided alone, advertisements are often provided with content such that when the users view a variety of content, the users are exposed to the advertisements. For example, web portals or social media use a method in which advertisements are inserted in the middle of an article, bulletin, video, etc. to expose users to the advertisements. Therefore, in order to generate advertising revenue, various media have tried to attract users and encourage the media by producing and securing high-quality content. However, as advertising through web portals or social media has been widely done, content is often created for advertising and advertising competition rather lowers the quality of content, resulting in losing the users.

In addition, it is difficult for media mainly providing local advertisements to secure excellent content. In particular, it is difficult to attract users because of lack of content in an early stage of business.

In the meantime, advertisers are burdened with high advertising costs for advertising through famous web portals or social media, and if the advertisers do not pay considerable advertising costs in online markets, the advertisers' products or services are not exposed and the advertisers will suffer substantial disadvantages, and disputes over advertising and advertising costs may arise.

As a related art of the present disclosure, Korean Patent No. 10-1914588 'BANNER ADVERTISEMENT SERVICE SYSTEM IN WHICH PRIORITIES OF BANNER ADVERTISEMENT ARE DETERMINED BY REFERENCE REGION' was proposed.

### Disclosure

### Technical Problem

The present disclosure has been made keeping in mind the above problems occurring in the previously proposed methods, and the present disclosure is directed to providing an information provision service system capable of securing content, wherein informational content and an advertisement are provided to a digital device, and furthermore, an advertising cost benefit is provided to an advertiser supplying the informational content, so that the advertiser is inspired to produce and supply high-quality informational content, thereby solving a problem of lack of content and reducing the advertiser's burden of advertising costs through the advertising cost benefit.

In addition, the present disclosure is directed to providing an information provision service system capable of securing content, wherein content received from the advertiser is separated into the informational content and advertising content and a penalty is given to the advertiser that has provided the advertising content, so that the advertising content produced for advertising is excluded and high quality of content is maintained, thereby increasing customer satisfaction with the content.

### Technical Solution

In order to achieve the above objectives, according to an aspect of the present disclosure, there is provided an information provision service system capable of securing content,
the information provision service system including
a service server configured to provide informational content and an advertisement to a digital device and, furthermore, provide an advertising cost benefit to an advertiser supplying the informational content,
wherein the service server includes:
   a database module configured to receive the informational content produced by the advertiser, and store therein the informational content and the advertisement;
   an information provision module configured to provide the digital device with the informational content and the advertisement of the advertiser that has supplied the informational content and, furthermore, insert the advertisement into the informational content or provide the advertisement in a preset advertising space;
   a feedback module configured to receive customer feedback about the provided informational content from the digital device; and
   a benefit provision module configured to provide the advertising cost benefit to the advertiser according to the customer feedback, and
   wherein the content is secured through the advertising cost benefit.

Preferably, the advertising cost benefit
includes an advertising cost discount or an advertising cost exemption or both.

Preferably, the database module is configured to
store therein content received from the advertiser, separating the content into the informational content and advertising content.

More preferably,
further included is a content classification module configured to analyze the content received from the advertiser, and determine whether the content is the informational content or the advertising content for classification.

More preferably,
further included is an advertiser management module configured to manage the advertiser by score or level and, furthermore, give a penalty to the advertiser that has provided the advertising content.

Preferably, the information provision module is configured to
set priority of the informational content according to the customer feedback and provide the informational content to the digital device.

Preferably, the information provision module is configured
to insert, into the informational content, the advertisement of the advertiser that has produced the informational content and provide a result of insertion, or to provide the informational content and the advertisement to the digital device such that when the informational content is displayed on the digital device, the advertisement of the advertiser that has produced the informational content is displayed in the preset advertising space.

Preferably, the feedback module is configured to
receive at least one selected from a group of the number of readings, the number of recommendations, and the number of comments of the informational content, customer evaluation information, and customer reaction information with respect to the informational content.

### Advantageous Effects

According to the information provision service system capable of securing content proposed in the present disclosure, the informational content and the advertisement are provided to the digital device, and furthermore, the advertising cost benefit is provided to the advertiser supplying the informational content, so that advertisers are inspired to produce and supply high-quality informational content, thereby solving the problem of lack of content and reducing the advertisers' burden of advertising costs through the advertising cost benefit.

In addition, according to the information provision service system capable of securing content proposed in the present disclosure, the content received from the advertiser is separated into the informational content and the advertising content and the penalty is given to the advertiser that has provided the advertising content, so that the advertising content produced for advertising is excluded and high quality of content is maintained, thereby increasing customer satisfaction with the content.

### Description of Drawings

FIG. 1 is a diagram illustrating a configuration of an information provision service system capable of securing content according to an embodiment of the present disclosure.
FIG. 2 is a diagram illustrating a detailed configuration of a service server of the information provision service system capable of securing content according to an embodiment of the present disclosure.
FIG. 3 is a diagram illustrating an example of a screen of a digital device in which informational content into which an advertisement is inserted is provided, in the information provision service system capable of securing content according to an embodiment of the present disclosure.
FIG. 4 is a diagram illustrating an example of a screen of the digital device in which an advertising space for providing an advertisement is set, in the information provision service system capable of securing content according to an embodiment of the present disclosure.

### description of the Reference Numerals in the Drawings>

100: Service server
110: Database module
120: Content classification module
130: Advertiser management module
140: Information provision module
150: Feedback module
160: Benefit provision module
170: Analysis module
200: Advertiser device
300: Digital device

### Best Mode

Hereinafter, preferred embodiments of the present disclosure will be described in detail with reference to the accompanying drawings such that the present disclosure can be easily embodied by those skilled in the art to which the present disclosure belongs. However, in describing the preferred embodiments of the present disclosure in detail, if it is decided that a detailed description of the known function or configuration related to the present disclosure makes the subject matter of the present disclosure unclear, the detailed description will be omitted. In addition, throughout the drawings, the same reference numerals are used for parts having similar functions and operations.

Throughout the specification, when a part is referred to as being 'connected' to another part, it includes not only being 'directly connected', but also being 'indirectly connected' by interposing the other part therebetween. In addition, when a part 'includes' an element, this means that it further includes other elements, but does not exclude other elements, unless specifically stated otherwise.

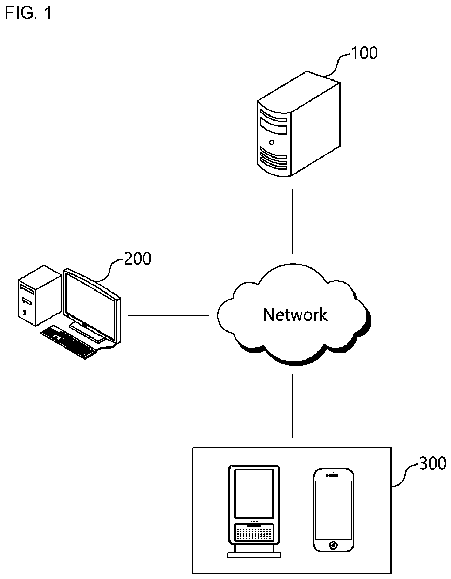

FIG. 1 is a diagram illustrating a configuration of an information provision service system capable of securing content according to an embodiment of the present disclosure. As shown in FIG. 1, the information provision service system capable of securing content according to the embodiment of the present disclosure may include a service server 100, and may further include an advertiser device 200 and a digital device 300.

The service server 100 provides informational content and an advertisement to the digital device 300 and, furthermore, may provide an advertising cost benefit to an advertiser that supplies the informational content. Herein, the providing of the informational content and the advertisement to the digital device 300 by the service server 100 means that data of the informational content and the advertisement to be output to output devices, such as a display, and a speaker, of the digital device 300 are transmitted to the digital device 300 over a network.

The informational content is content that may provide amusement and information to a user, and the data of the informational content may be data including at least one selected from the group of text, an image, sound, a video, and multimedia. For example, there are various examples of the informational content may be an article, post, a blog, a bulletin, an image, a video, etc.

In addition, the advertisement is a commercial advertisement for promoting a product or service of the advertiser, and the data of the advertisement may be data including at least one selected from the group of text, an image, sound, a video, and multimedia.

The advertiser device 200 may be a device of an advertiser that produces the informational content and supplies the same to the service server 100. That is, the advertiser may obtain the advertising cost benefit by producing various types of informational content while advertising through the service server 100. Herein, the advertising cost benefit may include an advertising cost discount or an advertising cost exemption or both. According to an embodiment, the advertising cost benefit may include an increase in the priority of exposure of an advertisement, and an increase in the frequency of exposure.

In the present disclosure, the advertiser may refer to an operator conducting business, in particular, a local operator conducting business in a region. The local operator wants to advertise at low cost in through local advertising media targeting the local operator's business region, but the local advertising media usually lack interesting content, so there is a limitation in attracting customers. Therefore, in the present disclosure, when the local operator, who is the advertiser, supplies the informational content directly to the service server 100, the advertising cost benefit, such as free exposure of the local operator's advertisement with the informational content, is provided, so that a problem of lack of content can be solved and the local advertising media can be encouraged.

The digital device 300 is a device capable of transmitting and receiving data to and from the service server 100 over the network, and may receive the informational content and the advertisement from the service server 100 to output the informational content and the advertisement. Herein, as shown in FIG. 1, examples of the digital device 300 may include a local signage or a mobile device or both, and may include a local box and various types of electronic devices capable of using the Internet.

The local signage is a digital device including output devices, such as a display part, and a speaker, for outputting the informational content and the advertisement. Like a kiosk, a signage, and a local box, the local signage is installed at a particular location and may output the informational content and the advertisement received from the service server 100. However, examples of the local signage may include any devices capable of transmitting and receiving data to and from the service server 100 over the network and outputting the informational content and the advertisement, regardless of specific types of the devices.

In the meantime, the local signage may be managed by an operator of the service server 100, or signage information may be received from a manager of the local signage for registration and the informational content and the advertisement may be provided.

Examples of the mobile device may include devices, such as a smartphone, a tablet PC, and a wearable device. However, examples of the mobile device 200 are not limited to the above-described types of devices, and examples of the mobile device may include any devices capable of transmitting and receiving data to and from the service server 100 over the network and outputting the informational content and the advertisement through output devices, regardless of specific types of the devices.

The electronic devices may include at least one of the following: a smartphone, a tablet personal computer (PC), a mobile phone, a video phone, an e-book reader, a desktop PC, a laptop PC, a netbook computer, a workstation, a server, a personal digital assistant (PDA), a media box, a game console, an electronic dictionary, and a wearable device. Examples of the wearable device may include at least one of the following: an accessory type (e.g., a watch, ring, bracelet, anklet, necklace, glasses, contact lens, or a head-mounted device (HMD)), a fabric or clothing-integrated type (e.g., electronic clothing), a body-attachable type (e.g., a skin pad or tattoo), and an implantable circuit. In various embodiments, the digital device 300 is not limited to the aforementioned devices, and may be a combination of two or more of the aforementioned various devices.

In the meantime, the network in the present disclosure may be realized as a wired network, such as a local area network (LAN), a wide area network (WAN), or a value-added network (VAN), or any type of wireless network, such as a mobile radio communication network, a satellite network, Bluetooth, a wireless broadband internet (Wibro), High Speed Downlink Packet Access (HSDPA), Long-Term Evolution (LTE), 5th generation mobile telecommunication (5G), etc.

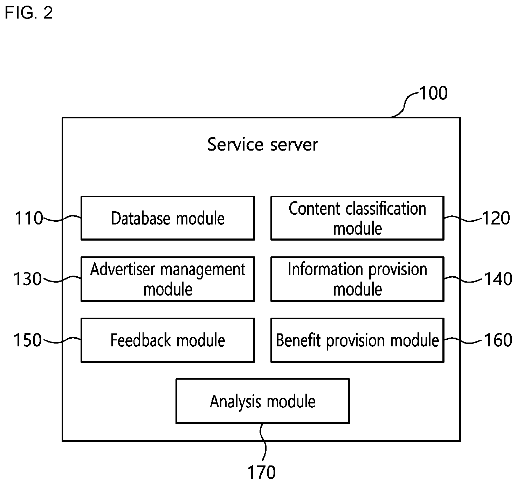

FIG. 2 is a diagram illustrating a detailed configuration of the service server 100 of the information provision service system capable of securing content according to an embodiment of the present disclosure. As shown in FIG. 2, the service server 100 of the information provision service system capable of securing content according to the embodiment of the present disclosure may include a database module 110, an information provision module 140, a feedback module 150, and a benefit provision module 160, and may further include a content classification module 120, an advertiser management module 130, and an analysis module 170.

The database module 110 may receive the informational content produced by the advertiser and may store therein the informational content and the advertisement. More specifically, the database module 110 may store therein content received from the advertiser, separating the content into the informational content and advertising content.

Herein, the advertising content is content that has the form of the informational content, but is produced for advertising. For example, there is content that has the form of a restaurant visit review, but is written for advertising in exchange for payment from the restaurant. Such advertising content may degrade the quality of information, lose customers as well as lose customers' trust in content and a platform providing the content.

Therefore, in the information provision service system capable of securing content according to the embodiment of the present disclosure, the content is separated into the informational content and the advertising content, and the informational content is provided to the digital device 300, excluding the advertising content, thereby maintaining high quality of content and thus increasing customer satisfaction with the content.

The content classification module 120 may analyze the content received from the advertiser and may determine whether the content is the informational content or the advertising content for classification. The database module 110 may store therein the informational content and the advertising content separating the informational content from the advertising content according to the classification by the content classification module 120.

In the meantime, the content classification module 120 may perform classification into the informational content and the advertising content through analysis of text, an image, etc. included in the content, and may perform classification using an artificial intelligence-based classifier. For example, a convolutional neural network (CNN), a recurrent neural network (RNN), a long short-term memory (LSTM) RNN, a random forest classifier, a weighted random forest (WRFR) classifier, cascade regression forest, etc. may be trained and used as a content classification model.

The advertiser management module 130 may manage the advertiser by score or level and, furthermore, may give a penalty to the advertiser that has provided the advertising content. Herein, the penalty may be to subtract a score assigned to the advertiser, or to lower the level than the currently set level, or to restrict uploading the content for a predetermined period.

The information provision module 140 may provide the digital device 300 with the informational content and the advertisement of the advertiser that has supplied the informational content, wherein the advertisement may be inserted into the informational content or the advertisement may be provided in a preset advertising space. That is, in the information provision service system capable of securing content according to the embodiment of the present disclosure, when the informational content produced by the advertiser is provided to the digital device 300, the advertisement of the advertiser is also provided, so that the advertiser can actively produce the informational content to supply the same, and the service server 100 can secure a large amount of content, accordingly.

More specifically, the information provision module 140 may insert, into the informational content, the advertisement of the advertiser that has produced the informational content and may provide a result of insertion, or may provide the informational content and the advertisement to the digital device 300 such that when the informational content is displayed on the digital device 300, the advertisement of the advertiser that has produced the informational content is displayed in the preset advertising space.

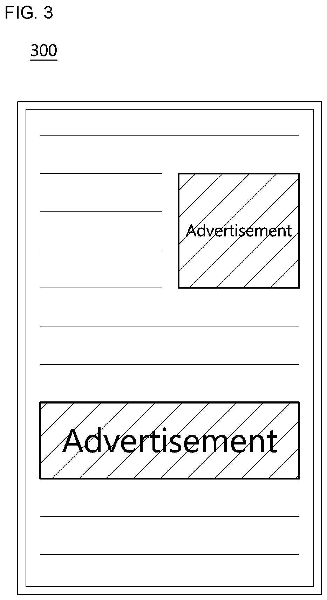

FIG. 3 is a diagram illustrating an example of a screen of the digital device 300 in which informational content into which an advertisement is inserted is provided, in the information provision service system capable of securing content according to an embodiment of the present disclosure. As shown in FIG. 3, the information provision module 140 of the information provision service system capable of securing content according to the embodiment of the present disclosure may insert, into the informational content, the advertisement of the advertiser that has produced the informational content and may provide a result of insertion. Herein, the matter of the informational content does not have to be related to the matter of the inserted advertisement, and the advertiser may produce and supply the informational content that can appeal to customers regardless of the category of business of the product or service. According to an embodiment, an advertisement of an advertiser that has paid a separate advertising cost may be further inserted and provided.

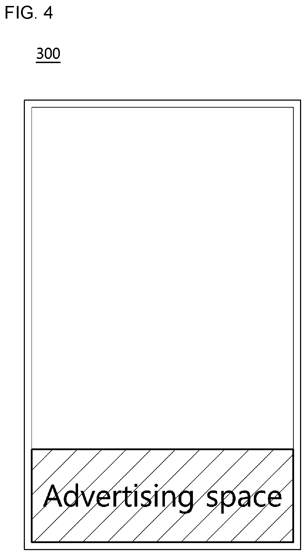

FIG. 4 is a diagram illustrating an example of a screen of the digital device 300 in which an advertising space for providing an advertisement is set, in the information provision service system capable of securing content according to an embodiment of the present disclosure. As shown in FIG. 4, the information provision module 140 of the information provision service system capable of securing content according to the embodiment of the present disclosure may provide the informational content and the advertisement to the digital device 300 such that when the informational content is displayed on the digital device 300, the advertisement of the advertiser that has produced the informational content is displayed in the preset advertising space. Herein, the preset advertising space may be set variously, such as not only the lower end of the display of the digital device 300 as shown in FIG. 4, but also the upper end, the sides, middle portions, etc.

In the meantime, the information provision module 140 may set the priority of the informational content according to customer feedback and may provide the informational content to the digital device 300. That is, when providing the informational content to the digital device 300, the information provision module 140 may arrange and provide the informational content in descending order of the number of readings, the number of recommendations, the number of comments, etc., according to the customer feedback received by the feedback module 150, which will be described in detail. Therefore, the advertiser needs to supply high-quality informational content so that the advertiser's advertisement can be output having priority to be exposed to many customers. Thus, the service server 100 can improve the quality of informational content and solve the problem of lack of content.

The feedback module 150 may receive the customer feedback about the provided informational content from the digital device 300. Herein, the feedback module 150 may receive at least one selected from a group of the number of readings, the number of recommendations, and the number of comments of the informational content, customer evaluation information and customer reaction information with respect to the informational content.

The benefit provision module 160 may provide the advertising cost benefit to the advertiser according to the customer feedback. Herein, the advertising cost benefit that the benefit provision module 160 provides may include an advertising cost discount or an advertising cost exemption or both. In addition, the benefit provision module 160 may differentiate advertising cost benefits according to the score or level assigned to an advertiser by the advertiser management module 130. Accordingly, the advertiser obtains a discount on or exemption from the advertising cost incurred when the advertisement is inserted into the informational content or the advertisement is provided in the advertising space, so that the advertiser can advertise without burden of advertising costs by providing informational content.

The analysis module 170 may analyze the customer feedback received by the feedback module 150. More specifically, the feedback module 150 may receive customer gaze information collected by using a camera provided in the digital device 300, and the analysis module 170 may use the customer gaze information received from the feedback module 150 to analyze the customer's reaction to the informational content and advertising effects. That is, by using the position on which the customer's gaze lingers, the time that it takes to view the informational content, and the time that it takes to view the advertisement are analyzed and may be used to understand the customer's reaction and advertising effects.

Herein, the analysis module 170 may use a deep learning model to analyze the customer feedback, such as a convolutional neural network (CNN), a recurrent neural network (RNN), long short-term memory (LSTM), a random forest classifier, a weighted random forest (WRFR) classifier, cascade regression forest, etc.

As described above, the information provision service system capable of securing content proposed in the present disclosure changes the concept of an existing platform in which content producers and advertisers are managed separately, and enables advertisers to directly produce and supply informational content in addition to advertisements, thereby expanding a content pool in an environment in which it is difficult to secure content.

Accordingly, according to the information provision service system capable of securing content proposed in the present disclosure, the service server 100 provides the informational content and the advertisement to the digital device 300 and, furthermore, provides the advertising cost benefit to the advertiser supplying the informational content, so that advertisers are inspired to produce and supply high-quality informational content, thereby solving the problem of lack of content and reducing the advertisers' burden of advertising costs through the advertising cost benefit. In addition, according to the present disclosure, the content received from the advertiser is separated into the informational content and the advertising content and the penalty is given to the advertiser that has provided the advertising content, so that the advertising content produced for advertising is excluded and high quality of content is maintained, thereby increasing customer satisfaction with the content.

Various modifications or applications of the above-described present disclosure may be made by those skilled in the art to which the present disclosure belongs, and the scope of the technical idea according to the present disclosure should be defined by the following claims.

## Claims

1. An information provision service system capable of securing content to solve lack of content of local advertising media, the system comprising:
a service server (100) configured to provide informational content and an advertisement to a digital device (300) and, furthermore, provide an advertising cost benefit to an advertiser supplying the informational content,
wherein the service server (100) comprises:
a database module (110) configured to receive the informational content produced by the advertiser, store therein the informational content and the advertisement and, furthermore, store therein content received from the advertiser, separating the content into the informational content and advertising content;
a content classification module (120) configured to analyze the content received from the advertiser, and determine whether the content is the informational content or the advertising content for classification;
an advertiser management module (130) configured to manage the advertiser by score or level and, furthermore, give a penalty to the advertiser that has provided the advertising content;
an information provision module (140) configured to provide the digital device (300) with the informational content and the advertisement of the advertiser that has supplied the informational content and, furthermore, insert the advertisement into the informational content or provide the advertisement in a preset advertising space;
a feedback module (150) configured to receive customer feedback about the provided informational content from the digital device (300); and
a benefit provision module (160) configured to provide the advertising cost benefit to the advertiser according to the customer feedback,
wherein the information provision module (140) is configured
to insert, into the informational content, the advertisement of the advertiser that has produced the informational content and provide a result of insertion, or to provide the informational content and the advertisement to the digital device (300) such that when the informational content is displayed on the digital device (300), the advertisement of the advertiser that has produced the informational content is displayed in the preset advertising space,
the content is separated into the informational content and the advertising content, and the informational content is provided to the digital device (300), excluding the advertising content, and
the content is secured through also providing the advertisement of the advertiser when the informational content produced by the advertiser is provided to the digital device (300), and through the advertising cost benefit.

2. The system of claim 1, wherein the advertising cost benefit may include an advertising cost discount or an advertising cost exemption or both.

3. The system of claim 1, wherein the information provision module (140) is configured to set priority of the informational content according to the customer feedback and provide the informational content to the digital device (300).

4. The system of claim 1, wherein the feedback module (150) is configured to receive at least one selected from a group of the number of readings, the number of recommendations, and the number of comments of the informational content, customer evaluation information, and customer reaction information with respect to the informational content.
